Europäisches Patentamt

European Patent Office

Office européen des brevets

(19)

(11) Veröffentlichungsnummer: **0 161 477**
**B1**

(12) **EUROPÄISCHE PATENTSCHRIFT**

(45) Veröffentlichungstag der Patentschrift: **23.01.91**

(51) Int. Cl.⁵: **B 32 B 27/08, B 60 R 21/04**

(21) Anmeldenummer: **85104233.3**

(22) Anmeldetag: **06.04.85**

(54) **Formkörper, Formkörperteile oder Folienbahn für den Kraftfahrzeuginnenraum.**

(30) Priorität: **12.05.84 DE 3417729**

(43) Veröffentlichungstag der Anmeldung:
**21.11.85 Patentblatt 85/47**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
**EP-A-0 040 969**
**DE-A-3 043 044**
**DE-A-3 227 107**
**US-A-3 816 234**
**US-A-4 048 274**

(73) Patentinhaber: **ALKOR GMBH KUNSTSTOFFE**
**Morgensternstrasse 9 Postfach 71 01 09**
**D-8000 München 71 (DE)**

(72) Erfinder: **Landler, Josef**
**Schiessstättstrasse 84**
**D-8190 Wolfratshausen (DE)**
Erfinder: **Huber-Hesselberger, Josef**
**Behringstrasse 113**
**D-8000 München 50 (DE)**

(74) Vertreter: **Seiler, Siegfried**
**Langhansstrasse 6**
**D-5650 Solingen 11 (DE)**

Courier Press, Leamington Spa, England.

**Beschreibung**

Die vorliegende Erfindung betrifft eine weitere Ausbildung und Verbesserung von Verbundfolien gemäß DE—A—32 27 107. Sie bezieht sich somit auf Formkörper, Formkörperteile oder Folienbahnen für Kraftfahrzeuginnenräume, zusammengesetzt aus tiefziehfähigen, ungeschäumten Verbundfolien, die eine Dicke von 500 µm—2500 µm, vorzugsweise 600 µm—1500 µm, aufweisen, laminiert und in Form von Zwei- oder Mehrfachschichten aufgebaut sind, bestehend aus einer oder mehreren weichmacherfreien oder weichmacherarmen Unterfolien aus Mischungen von Polyvinylchlorid (PVC), Acrylnitril-Butadien-Copolymerisaten (ABS) sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder Mischungen von Polyvinylchlorid (PVC) und Acrylnitril-Butadien-Copolymerisaten (ABS) mit einem PVC-ABS-Gehalt von mehr als 40 Gew.-%, vorzugsweise mehr als 50 Gew.-% (bezogen auf 100 Gew.-Teile der Kunstharzmischung für die Unterfolie), mit einem anderen Kunstharz, vorzugsweise einem Acrylnitril-Copolymerisat oder einem Kunstharzgemisch auf der Basis von Acrylnitril-Copolymerisat, sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist und einer an der Unterfolie bzw. an den Unterfolien angeordneten Schaumschicht oder Hinterschäumung, vorzugsweise einer Polyurethanschaumschicht oder einer Polyurethanhinterschäumung, sowie ggf. einer Oberfolie oder Oberflächenschicht, vorzugsweise einer weichmacherfreien oder weichmacherarmen Oberfolie mit einer Dicke von 40—500 µm, vorzugsweise 100—350 µm, aus Polyvinylchlorid sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine phase bildet oder mit Polyvinylchlorid verträglich ist, oder Mischungen von Polyvinylchlorid mit einem anderen Kunstharz, vorzugsweise einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid verträglich ist.

Die Verbundfolie nach der Patentanmeldung DE—A—32 27 107 weist zahlreiche Vorteile wie u.a. Alterungsstabilität gegenüber Licht und Wärme, gute Tiefziehfähigkeit, Kälteflexibilität usw. auf. Werden jedoch harte bis halbharte Polyurethanschäume eingesetzt, so besteht die Gefahr, daß ungünstige Wechselwirkungen von Bestandteilen des polyurethanschaumes und/oder der Verbundfolie auftreten, die bei Wärmelagerung zu Farbverschiebungen und/oder Erniedrigung der Alterungsstabilität der Verbundfolie führen können. Diese negativen Wechselwirkungen der Bestandteile des Polyurethanschaumes werden noch verschärft bzw. in ihrer Auswirkung gesteigert, wenn man weichere Polyurethanschäume einsetzt.

Aus GB—A—13 62 787 ist die Verwendung einer Sperrschicht bekannt, die aus einer Metallfolie oder einer Polyesterfolie besteht, um die Weihmacherwanderung aus weichgemachten PVC-Folien oder PVC-Bahnen in benachbarte Bahnen oder Folien zu verhindern.

In US—A—40 48 274 wird eine Schaumstoffisolierung für Kühlschränke beschrieben. Diese besteht aus einer gasgefüllten Schaumstoffschicht und einer thermoplastischen Bahn mit einer dazwischen angeordneten Sperrschicht, um den Abbau der thermoplastischen Bahn durch den im Schaumstoff enthaltenen gasförmigen Halogenkohlenwasserstoff zu verhindern.

Die LU—A—65 498 betrifft einen dekorativen Überzug aus einer weichmacherhaltigen PVC-Schicht, eine für den Weichmacher undurchlässige Sperrschicht und eine Klebstoffschicht.

Die genannten Literaturstellen betreffen jedoch keine Sperrschichten in tiefziehfähigen Verbundfolien für Kraftfahzeuginnenraume.

Ziel und Aufgabe der vorliegenden Erfindung war es daher, Formkörper, Formkörperteile und Folienbahnen zu entwickeln, die zwar die wesentlichen Vorteile der Verbundfolie nach DE—A—32 27 107 aufweisen, zusätzlich jedoch selbst bei Wärmelagerung und/oder Verwendung weicherer Polyurethanschäume Farbverschiebungen und/oder Erniedrigung der Alterungsstabilität nicht oder nur in einem geringen Maße aufweisen. Weiterhin sollte das aus Verbundfolie und Schaum bestehende Gesamtsystem (d.h. der Formkörper oder das Formkörperteil) bei der Berührung einen weicheren Griff ergeben und/oder Verzugserscheinungen bei Verwendung von weichem Polyurethanschaum nicht oder nur in einem geringen Maße auftreten, so daß die sog. Konturenschärfeabweichungen möglichst gering sein sollen.

Erfindungsgemäß wurde festgestellt, daß diesen Zielen und Aufgaben die eingangs beschriebenen Formkörper, Formkörperteile oder Folienbahnen für den Kraftfahrzeuginnenraum gerecht werden, wenn zwischen der Unterfolie oder der Unterschicht und der Schaumschicht bzw. Hinterschäumung mindestens eine Sperrschicht oder Sperrfolie mit einer Dicke von 10 µm—300 µm, angeordnet ist, aus einem Polymethacrylsäureester, unvernetztem ode vernetztem Polyurethan, Vinylchloridcopolymerisat mit Polyvinylacetat oder Polyvinylbutyral, Polyvinylidenchlorid oder Polyvinylidenfluorid, Olefincopolymerisat, Polyamid, kautschukartigem Terpolymerisat aus Ethylen, Propylen und einem Dien (EPDM), kautschukartigem Ethylen-Propylen-Mischpolymerisat (EPM), chloriertem Polyethylen besteht

2

oder eines oder mehrere dieser Polymeren als Legierungsbestandteil, sowie gegebenenfalls Zusatz- und/oder Verarbeitungshilfsmittel enthält, wobei die Schaumschicht oder Hinterschäumung eine Stauhhärte bei 40% Stauchung (nach DIN 5577) von 15 bis 45 kPa formgeschäumt und/oder 3 bis 20 kPa im Becher frei geschäumt aufweist und die aus Sperrschicht oder Sperrfolie, Unterfolie und Oberfolie und/oder Decksicht bestehende Verbundfolie eine Shore-D-Härte von 20 bis 65, vorzugsweise 25 bis 60, aufweist.

Die Auswahl der Zusammensetzung und der Bestandteile der Sperrschicht oder Sperrfolie erfolgt dabei derart, daß sich eine Sperrschicht oder Sperrfolie ergibt, die bei dem Tiefziehvorgang ohne Rißbildung oder Zerstörung dieser Schicht oder Folie verformt werden kann und die gleichzeitig eine gute Haftung oder Haftschichten gegenüber den angrenzenden Schichten oder Folien und/oder dem Schaum aufweist.

Die Dehnfähigkeit der Sperrschicht oder Sperrfolie sollte so sein, daß sich in der Wärme eine Dehnfähigkeit von mehr als 150%, vorzugsweise 170—350% ergibt.

Nach einer bevorzugten Ausführungsform ist auf der Oberfolie oder Oberflächenschicht oder auf der, der Schaumschicht entgegengesetzten Seite der Unterfolie oder Unterschicht mindestens eine geschäumte oder ungeschäumte Deckschicht oder Deckfolie mit einer Schichtdicke von 3—500 µm, vorzugsweise 6—300 µm, angeordnet.

Nach einer weiteren bevorzugten Ausführungsform besteht die geschäumte oder ungeschäumte Deckschicht oder Deckfolie aus einem Polyacrylat, Polymethacrylat, Polyester, Polyäther oder vernetztem oder unvernetztem Polyurethan, Polyvinylidenhalogenid, einem kautschukartigen Terpolymerisat aus Ethylen, Propylen und einem Dien (EPDM), vorzugsweise einer Legierung oder Mischung von EPDM mit Polypropylen und/oder einem Polyester, kautschukartigem Ethylen-Propylen-Mischpolymerisat (EPM), chloriertem Polyethylen oder ein oder mehrere der Polymeren, vorzugsweise als Legierung (Blend) oder vernetzt oder aufgepfropft, sowie Verarbeitungshilfsmittel und/oder Zusatzmittel, insbesondere anorganische und/oder organische pigmente bzw. Farbstoffe oder enthält ein oder mehrere dieser Bestandteile.

Unter dem Polyurethanschaum oder der Polyurethanhinterschäumung ist ein Träger oder eine profilierte oder unprofilierte, geformte oder ungeformte Trägerplatte oder Trägerschicht angeordnet.

Nach einer bevorzugten Ausführungsform trägt die Sperrschicht oder Sperrfolie auf mindestens einer Seite eine Haftvermittlerschicht oder -folie, die sowohl zur Folie als auch zum Schaum bzw. zur Hinterschäumung eine Haftung ergibt.

Die Haftvermittlerschicht oder -folie enthält ein haftendes Polyurethanharz, ein Polare Gruppen enthaltendes Olefincopolymerisat, vorzugsweise polare Gruppen enthaltendes Ethylen-Vinylacetat-Copolymerisat und/oder Ethylen-Acrylsäureester-Copolymerisat oder Vinylidenfluoridhomo- oder -copolymerisat, Vinylchloridhomo- und/oder -pfropfpolymerisat, vorzugsweise Vinylacetat-Copolymerisat, Vinylbutyral-Copolymerisat, Vinylidenchloridhomo- oder -copolymerisat oder besteht daraus.

Die Oberfolie besteht nach einer weiteren bevorzugten Ausführungsform aus einer Mischung oder Legierung von Polyvinylchlorid mit einem Polyacrylat und/oder Polymethacrylat und/oder Polyurethan und/oder einem polare Gruppen enthaltenden Olefinco- oder -terpolymerisat oder enthält ein oder mehrere dieser Bestandteile sowie gegebenenfalls Verarbeitungshilfs- und/oder Zusatzmittel.

Nach einer weiteren Ausführungsform enthält die Deckschicht (zur Verbesserung des Hautfühlverhaltens) geschäumte Kugeln oder kugelähnliche Kunststoffkörper, Kunststoffhohlkörper, Mikrokugeln oder Kunststoff-Fasern.

Nach einer bevorzugten Ausführungsform weist die Verbundfolie eine Narbstruktur auf.

Als Polyvinylchlorid für die Unter- und/oder Oberfolie werden Vinylchloridhomopolymerisate eingesetzt. Es können jedoch auch Vinylchlorid-Copolymerisate, die durch Polymerisation mit bis zu 20 Gew.-%, vorzugsweise bis zu 10 Gew.-%, (bezogen auf 100 Gew.-% Vinylchlorid-Copolymerisat) anderer olefinisch ungesättigter Monomere hergestellt werden, Verwendung finden.

Als Vinylchloridpolymerisate werden bevorzugt Suspensions-, Pfropf- und Blockpolymerisate für die Ober- und Unterfolie eingesetzt.

Nach einer bevorzugten Ausführungsform besteht das Acrylnitril-Copolymerisat für die Unterfolie aus Styrol-Acrylnitril-Copolymerisat (SAN) und/oder Acrylnitril-Butadienharz (NBR).

Das Plastifiziermittel für die Ober- und/oder Unterfolie besteht aus einem plastifizierenden Hochpolymeren mit polaren Gruppen, das mit dem Polyvinylchlorid einen Glaspunkt (Tg) bildet, der zwischen dem Glaspunkt des PVC und dem Glaspunkt (Tg) des Plastifizierungsmittels liegt.

Nach einer Ausführungsform besteht das Acrylnitril-Copolymerisat der Oberfolie aus Acrylnitril-Butadien-Copolymerisat (ABS) und/oder Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfsmittel) mehr als 50 Gew.-%, vorzugsweise mehr als 60 Gew.-%.

Das Verhältnis der Dicke von Oberfolie zu Unterfolie wird so eingestellt, daß es 1:1 bis 1:8, vorzugsweise 1:3 bis 1:7, beträgt.

Der Gehalt des polare Gruppen aufweisenden Plastifiziermittels oder Plastifiziermittelgemisches in der Unterfolie beträgt 5—30 Gew.-%, vorzugsweise 7—23 Gew.-%, (bezogen auf die Kunstharzmischung der Unterfolie gerechnet ohne Verarbeitungshilfsmittel, Zusatzstoffe, Füllmittel und dgl.).

3

Nach einer zweckmäßigen Ausführungsform besteht das Plastifiziermittel aus einem Ethylen-Vinylacetat-Copolymerisat (EVA) mit polaren Gruppen und einem Vinylacetatgehalt von 60—80 Gew.-%, vorzugsweise 65—70 Gew.-%.

Nach einer anderen bevorzugten Ausführungsform besteht das Plastifiziermittel aus einem olefinischen Terpolymerisat mit statistisch verteilten Acetat und Kohlenmonoxidgruppen. Es weist ein Molekulargewicht größer als 200.000 und eine Zusammensetzung von 50—79 Gew.-%, vorzugsweise 57—72 Gew.-% Ethylen, 35—15 Gew.-%, vorzugsweise 29—19 Gew.-% Vinylacetat und 15—6 Gew.-%, vorzugsweise 14—9 Gew.-% Kohlenmonoxid auf.

Nach einer weiteren bevorzugten Ausführungsform besteht die Unterfolie aus einer Mischung oder Legierung von Suspensionspolyvinylchlorid, Acrylnitrilbutadien-Copolymerisat (ABS), Styrol-Acrylnitril-Copolymerisat (SAN), Acrylnitril-Butadienharz (NBR) sowie einem olefinischen Terpolymerisat, vorzugsweise mit statistisch verteilten Gruppen, insbesondere Vinylacetat- und Kohlenmonoxidgruppen (vorzugsweise mit den vorgenannten Gewichtsmengen an Ethylen, Acetat oder Vinylacetat und Kohlenmonoxid). Nach der bevorzugten Ausführungsform hat die Unterfolie einen Suspensions-Polyvinylchloridgehalt von weniger als 27 Gew.-%, vorzugsweise weniger als 25 Gew.-%, einen Gehalt des olefinischen Terpolymerisats mit Acetat- bzw. Vinylacetat- und Kohlenmonoxidgruppen, vorzugsweise statistisch verteilten Gruppen, von mehr als 33 Gew.-%, vorzugsweise mehr als 35 Gew.-% und als Restbestandteil eine Mischung oder Legierung von mindestens zwei, vorzugsweise aller drei folgender Polymeren: Acrylnitril-Butadien-Copolymerisat (ABS), Styrol-Acrylnitril-Copolymerisat (SAN), Acrylnitril-Butadienharz (NBR).

Nach einer bevorzugten Ausführungsform wird neben dem S-PVC und dem olefinischen Terpolymerisat mit statitstisch verteilten Acetat- und Kohlenmonoxidgruppen eine Mischung bzw. Legierung von Acrylnitril-Butadien-Copolymerisat (ABS) und Styrol-Acrylnitril-Copolymerisat (SAN) sowie Acrylnitril-Butadienharz (NBR) eingesetzt mit der Maßgabe, daß der Gehalt an Acrylnitril-Butadienharz (NBR) geringer ist als der Gehalt eines oder der beiden anderen Copolymerisate und daß der Acrylnitril-Butadien-Copolymerisatgehalt gleich oder geringer ist als der Gewichtsanteil der beiden anderen Copolymerisate bzw. Harze.

Nach einer weiteren bevorzugten Ausführungsform der Unterfolie, die weniger als 27 Gew.-%, vorzugsweise weniger als 25 Gew.-% Suspensions-PVC und mehr als 33 Gew.-%, vorzugsweise mehr als 35 Gew.-% (bezogen auf die Kunststoffmischung bzw. Legierung ohne Zusatz- und Verarbeitungshilfsmittel), ein olefinisches Terpolymerisat mit Acetat- bzw. Vinylacetat- und Kohlenmonoxidgruppen enthält, ist das Gewichtsverhältnis von NBR zu SAN zu ABS 1:1,5 bis 3:3 bis 6, vorzugsweise 1:1,7 bis 2,5:3,8 bis 5.

Nach einer anderen zweckmäßigen Ausführungsform wird als Plastifiziermittel ein Polycaprolacton (PCL) mit polaren Gruppen verwendet.

Die Ober- und/oder Unterfolie enthalten cadmiumfreie Stabilisatoren, vorzugsweise Zinnstabilisatoren. Die Mischungen werden vorzugsweise unter Zusatz von Stabilisatoren, Antioxidantien, Verarbeitungshilfsmitteln usw. hergestellt.

Nach einer bevorzugten Ausführungsform besteht bzw. bestehen die Unterfolie bzw. Unterfolien aus 20—50 Gew.-%, vorzugsweise 25—37 Gew.-%, Polyvinylchlorid und 60—20 Gew.-%, vorzugsweise 37—25 Gew.-% Acrylnitril-Butadien-Copolymerisat (ABS), (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBR) und enthalten je 100 Gew.-Teile des Kunstharzgemisches zusätzlich 0,5—12 Gew.-Teile, vorzugsweise 1—7 Gew.-Teile, eines oder mehrerer Verarbeitungshilfsmittel sowie 0—40 Gew.-Teile, vorzugsweise 0,5—20 Gew.-Teile, eines Füllstoffes oder Füllstoffgemisches und/oder eines Mittels zum Schwerentflammbarmachen. Die Oberfolien enthalten bevorzugt dabei 10—35 Gew.-%, vorzugsweise 18—30 Gew.-%, eines Plastifiziermittels oder Plastifiziermittelgemisches (bezogen auf die Kunstharzmischung bzw. -legierung ohne Verarbeitungshilfsmittel und Füllstoffe), sowie je 100 Gew.-Teile des Kunstharzgemisches 0,5—12 Gew.-Teile, vorzugsweise 1—7 Gew.-Teile, eines oder mehrerer Verarbeitungshilfsmittel. Gegebenenfalls können nach einer Ausführungsform je 100 Gew.-Teile der Kunststoffmischung 0—40 Gew.-Teile, vorzugsweise 0,5—20 Gew.-Teile, eines Füllstoffes oder Füllstoffgemisches und/oder eines Mittels zum Schwerentflammbarmachen zugefügt werden.

Nach einer Ausführungsform besteht die Unterfolie aus mehreren nach dem Coextrusions-, Kalandrier- oder Kaschierverfahren vereinigten Folien oder Folienschichten.

Zweckmäßig enthalten somit gemäß dem Verfahren die Ober- und/oder Unterfolien zusätzliche Füllstoffe, Verarbeitungshilfsmittel und/oder Mittel zur Schwerentflammbarmachung.

Die Oberflächen- und/oder Deckschicht bzw. -folie ist nach einer bevorzugten Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, auf ihrer freien Oberflächenschicht überzogen.

Aus den erfindungsgemäßen Verbundfolien werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile sowie Seitenpfosten und deren Sicherheitsabdeckungen für Kraftfahrzeuge und Flugzeuge hergestellt.

Nach einer bevorzugten Ausführungsform besteht das Plastifiziermittel in den Folien aus einer Mischung des plastifizierenden Hochpolymeren mit polaren Gruppen, das ein Molekulargewicht von größer als 10.000, vorzugsweise größer als 30.000, aufweist und mit Polyvinylchlorid verträglich ist oder eine Phase bildet, mit mindestens einem aromatischem Polycarbonsäureester, vorzugsweise Trimellithsäureester, im Verhältnis aromatischer Polycarbonsäureester zu plastifizierenden Hochpolymere von 8:2 bis 0,1:10, vorzugsweise von 3:2 bis 2:3.

Der Gehalt des Plastifiziermittels in den Folien (Unter- und/oder Oberfolien bzw. -schicht) beträgt dabei 10 40 Gew.-%, vorzugsweise 15—35 Gew.-%. Hinsichtlich der Art der zur Mischung mit dem aromatischen Polycarbonsäureester, vorzugsweise Trimellithsäureester, verwendeten plastifizierenden Hochpolymere mit polaren Gruppen und einem Molekulargewicht von größer als 10.000 wird auf die Angaben in der Stammanmeldung DE—A—32 27 107) verwiesen.

Nach einer vorteilhaften Ausführungsform der Erfindung besteht das Acrylnitril-Copolymerisat in den Folien aus einem Acrylnitril-Acrylatharz (NAR). Hierdurch werden Folien mit weiter verbesserter UV- und Alterungsbeständigkeit erhalten.

Gemäß einer bevorzugten Ausführungsform besteht die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Butadienharz (NBR) und dem Plastifiziermittel und die Unterfolie bzw. die Unterfolien aus Polyvinylchlorid (PVC), Acrylnitril-Butadien-Styrol-Copolymerisat (ABS) und/oder Styrol-Acrylnitril-Copolymerisat (SAN), Acrylnitril-Butadienharz (NBR) und dem Plastifiziermittel.

Nach einer weiteren bevorzugten Ausführungsform besteht die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Acrylatharz (NAR) und dem Plastifiziermittel und die Unterfolie bzw. die Unterfolien aus Polyvinylchlorid (PVC), Acrylnitril-Butadien-Styrol-Copolymerisat (ABS) und/oder Styrol-Acrylnitril-Copolymerisat (SAN), Acrylnitril-Acrylatharz (NAR) und dem Plastifiziermittel.

Die Erfindung betrifft weiterhin ein Verfahren zur Herstellung von Formkörpern, Formkörperteilen oder Folienbahnen für Kraftfahrzeuginnenräume, wobei die Kunststoffmischungen der Unter- sowie ggf. der Oberfolie in einem Extruder oder anderen, an sich bekannten Plastifiziervorrichtungen, zusammen mit den Verarbeitungshilfsmitteln vermischt, erhitzt und plastifiziert werden sowie unter Bildung einer oder mehrerer Folien bzw. Schichten in einem Kalandrier-, Kaschier- und/oder Coextrusionsverfahren vereinigt werden. Nach der Erfindung wird auch die Kunststoffmischung der Sperrfolie oder Sperrschicht und/oder der Deckfolie oder Deckschicht in einem Extruder oder einer anderen an sich bekannten Plastifiziervorrichtung zusammen mit den Verarbeitungshilfsmitteln vermischt, erhitzt und plastifiziert. Die Vereinigung mit der Unterfolie oder der aus Unter- und Oberfolie bestehenden Verbundfolie erfolgt im Kalandrierverfahren.

Nach einer Ausführungsform wird dabei eine Sperrfolie, die vorzugsweise aus oder unter Mitverwendung von Polymethacrylsäureester und/oder Homo- oder Copolymerisat von Ethylenvinylalkohol besteht oder diese enthält, verwendet, deren Gehalt an inneren Weichmachern oder weichmachenden Polymerisaten, 0,1 bis 60 Gew.-%, vorzugsweise 10 bis 49 Gew.-% (bezogen auf 100 Gew.-% der trockenen Kunstharzlegierung) beträgt.

Nach einer anderen bevorzugten Ausführungsform des Verfahrens zur Herstellung von Formkörpern, Formkörperteilen oder Folienbahnen von Kraftfahrzeuginnenräumen, wird die Sperr- und/oder Deckschicht mittels eines Rakel-, Druckwalz- oder Sprühverfahrens auf die Unter- oder aus Unter- und Oberfolie bestehende Verbundfolie aufgebracht; vorzugsweise erfolgt nachfolgend eine Narbgebung.

Nach einer weiteren Ausführungsform wird die Sperr- und/oder Deckschicht mittels eines Rakel-, Druckwalz- oder Sprühverfahrens auf die Unter- oder aus Unter- und Oberfolie bestehende Verbundfolie aufgebracht, nachdem die Narbgebung der Unter- oder aus Unter- und/oder Oberfolie bestehende Verbund folie erfolgt ist.

Die Sperr- und/oder Deckschicht wird dabei in Form einer Verdünnungsmittel enthaltenden Dispersion oder Lösung aufgetragen, die vorzugsweise organisch-chemische kunststofflösende oder -anquellende Lösungsmittel und/oder Weichmacher und/oder Wasser als Verdünnungsmittel enthalten und daraus bestehen.

Nach einer bevorzugten Ausführungsform erfolgt die Verformung oder Umformung der Verbundfolie in einer oberflächenstrukturierten Form, vorzugsweise unter Verwendung oder teilweiser oder stellenweiser Verwendung eines negativen Tiefziehverfahrens.

Die aus der Verbundfolie erhaltenen Formen, Formteile oder Formkörper, die vorzugsweise in Form von Armaturenbrettern, Seitenwänden, Rückwänden, Abdeckungen oder Teilen davon hergestellt werden, können jedoch unmittelbar eingesetzt oder in Form der hinterschäumten Formteile bzw. Formkörper benutzt werden.

Im letzteren Fall werden die aus der Verbundfolie hergestellten Formkörper und/oder -teile direkt ausgeschäumt oder zum Ausschäumen in eine Ausschäumform eingelegt. Zum Ausschäumen werden die an sich bekannten schäumbaren Kunststoffe, vorzugsweise Polyurethanschaum und dgl. verwendet, denen je nach Art und Zusammensetzung der Kunststoffe Treibmittel, Mittel zum Schwerentflammbarmachen, Hilfsund Zusatzstoffe vor dem Verschäumen zugesetzt werden.

Die Dicke des Schaumes richtet sich nach dem vorgesehenen Einsatzzweck und der äußeren Form des Formteiles. Sie kann zwischen 1 mm—20 cm, vorzugsweise zwischen 3 mm bis 7 cm, liegen.

5

Da nach einer Ausführungsform sowohl die Oberfolien als auch die Unterfolien weichmacherarm (Weichmachergehalt geringer als 3 Gew.-%), vorzugsweise weichmacherfrei von Primär- bzw. Flüssigweichmachern sind, besitzen die erfindungsgemäßen Verbundfolien und die daraus hergestellten Formkörper oder Formkörperteile nur geringe fog-Werte. Bei den fog-Werten handelt es sich um Werte für die bei dem Erwärmen bzw. Erhitzen aus dem Kunststoff austretenden Bestandteile.

Die Härte der Oberfolie ist gleich oder kleiner als die Härte der Unterfolie. Durch die relativ geringe Härte der Oberfolie und durch die erfindungsgemäße Kombination und/oder Zusammensetzungen der Verbundfolien werden zusätzlich die Vorteile einer höheren Dehnfähigkeit, einer höheren Kälteflexibilität, eines verbesserten Fließverhaltens bzw. Tiefziehens, einer verzögerten Rißbildung und einer geringeren Steifigkeit erzielt. Die Oberfolie kann zusätzlich noch Lichtstabilisatoren in geringen Gewichtsmengen enthalten.

## Beispiele

### 1. Beispiel für Zusammensetzung der Oberfolie:

| | | |
|---|---|---|
| Suspensions-Polyvinylchlorid (K-Wert 70) | Gew.-Teile | 40 |
| Styrol-Acrylnitril-Copolymerisat | Gew.-Teile | 15 |
| Terpolymerisat, vorzugsweise mit statistisch verteilten Acetat- und Kohlenmonoxid-gruppen | Gew.-Teile | 45 |
| | Gew.-Teile | 100 |
| Stabilisatoren | Gew.-Teile | 1,3 |
| Antioxidantien und/oder Gleitmittel | Gew.-Teile | 3,7 |

### 2. Beispiel für Zusammensetzung der Unterfolie:

| | | |
|---|---|---|
| Suspensions-Polyvinylchlorid (K-Wert 70) | Gew.-Teile | 22 |
| Acrylnitril-Butadien-Copoly-merisat (ABS) | Gew.-Teile | 22 |
| Styrol-Acrylnitril-Copoly-merisat (SAN) | Gew.-Teile | 11 |
| Acrylnitril-Butadienharz (NBR) | Gew.-Teile | 5 |
| Terpolymerisat, vorzugsweise mit statistisch verteilten Acetat- und Kohlenmonoxidgruppen | Gew.-Teile | 40 |
| | Gew.-Teile | 100 |
| Stabilisatoren | Gew.-Teile | 1,1 |
| Antioxidantien und/oder Gleitmittel | Gew.-Teile | 4,0 |

3. Beispiel für Zusammensetzung der Deckschicht und/oder Sperrschicht
Methacrylsäuremethylester schlagzäh modifiziert mit Acrylelastomeren (z.B. Produkt der Firma Röhm GmbH Chemische Fabrik in Darmstadt—Bezeichnung ZK 37)
4. Physikalische Prüfwerte (Ober und Unterfolie sowie Sperrschicht)
Biegesteifigkeit (DIN 53350)
Biegemodul (in N/mm2)
Längs X = 74 s = 1,0 n = 5 d = 1,05 mm
Quer X = 54 s = 4,7 n = 5

EP 0 161 477 B1

Probebreite 20 mm
Probelänge 100 mm
Biegelänge 10 mm
Biegewinkel 10 Grad

Die Proben wurden mit der Oberseite nach unten geprüft.

Die beigefügten Zeichnungen stellen schematisch die erfindungsgemäßen Folienbahnen, Formkörper oder Formkörperteile dar.

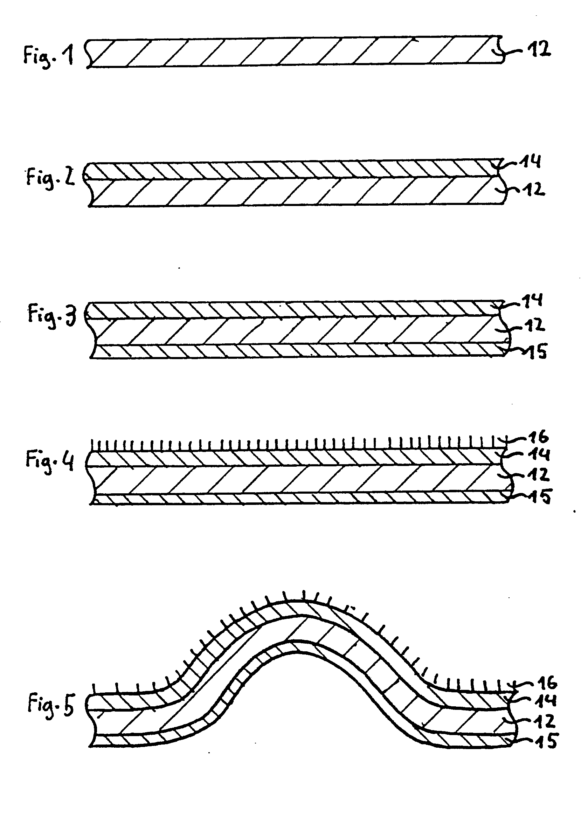

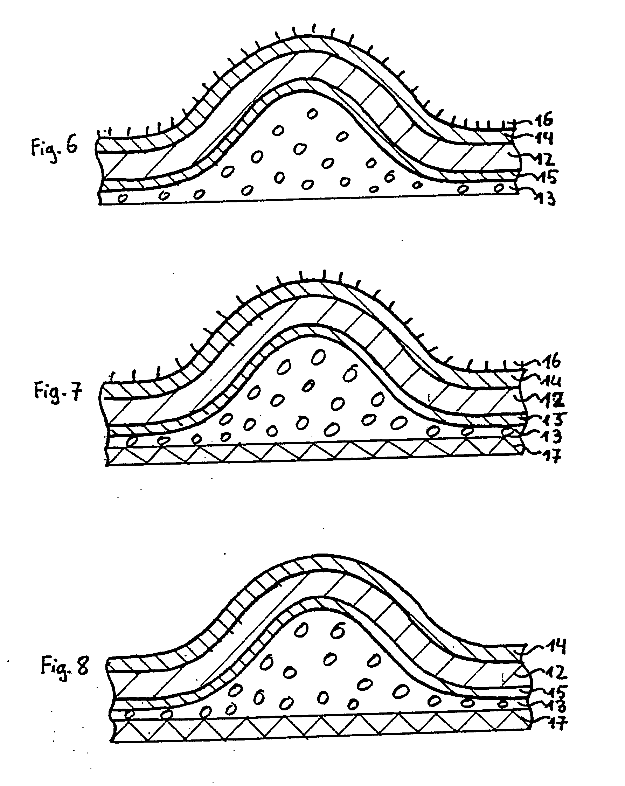

In Fig. 1 ist ein Querschnitt durch die Unterfolie 12 (getrennt von den anderen Schichten bzw. Folien) dargestellt, die nach Fig. 2 mit der Oberfolie 14 in Verbindung steht. In Fig. 3 ist unter Ziffer 15 die Sperrschicht oder Sperrfolie wiedergegeben, die eine Durchwanderung oder einen Durchtritt von Stoffen zu der bzw. den Unterfolien 12 und der Oberfolie 14 verhindert.

In Fig. 4 ist die Oberflächenschicht oder Oberfolie 14 zusätzlich mit einer Deckschicht oder Deckfolie 16 versehen. Die Deckschicht oder Deckfolie 16 kann nach einer Ausführungsform auch unmittelbar auf der Unterfolie aufgebracht sein.

In Fig. 5 ist die Umformung der Folienbahn gemäß Fig. 4 zu einem Formkörperteil schematisch dargestellt.

In Fig. 6 ist ein Formkörper bestehend aus Deckschicht 16, Oberfolie 14, Unterfolie 12, Sperrschicht 15 und Hinterschäumung 13 wiedergegeben, wobei dieser Formkörper nach Fig. 7 auf einer Trägerplatte 17 angeordnet ist.

In Fig. 8 ist ein Querschnitt durch einen Formkörperteil bestehend aus Oberflächenschicht 14, Unterfolie oder Unterfolien 12, Sperrschicht 15, Hinterschäumung oder Schaumschicht 13 und Trägerplatte 17 schematisch wiedergegeben.

Die erfindungsgemäßen Formkörper, Formkörperteile oder Folienbahnen weisen u. a. folgende Vorteile auf:

Hohe Alterungsstabilität, große gestalterische Möglichkeiten der Oberfläche in Farbe und Narbe, weicher Griff ("touch"), spannungsarm und Beibehaltung der "Konturenschärfe".

Die erfindungsgemäße Deckschicht sollte u.a. folgenden Anforderungen gerecht werden:

Mattierungsfähig, kein Aufglänzen der Narbtäler beim Tiefziehen, lichtstabil, wärmestabil, farbkonstant, hautfreundlich ("touch"), hemmende Wirkung gegenüber fog, geruchsfreundlich, deckend einfärbbar und gut strukturierfähig.

## Patentansprüche

1. Formkörper, Formkörperteile oder Folienbahnen für Kraftfahrzeuginnenräume, zusammengesetzt aus

    1. tiefziehfähigen, ungeschäumten Verbundfolien, die
        1.1 eine Dicke von 500 μm—2500 μm, vorzugsweise 600 μm—1500 μm, aufweisen,
        1.2 laminiert und in Form von Zwei- oder Mehrfachschichten aufgebaut sind, bestehend aus
    2. einer oder mehreren weichmacherfreien oder weichmacherarmen Unterfolien aus
        2.1 Mischungen von Polyvinylchlorid (PVC), Acrylnitril-Butadien-Copolymerisaten (ABS) sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder
        2.2 Mischungen von Polyvinylchlorid (PVC) und Acrylnitril-Butadien-Copolymerisaten (ABS) mit einem PVC-ABS-Gehalt von mehr als 40 Gew.-%, vorzugsweise mehr als 50 Gew.-% (bezogen auf 100 Gew.-Teile der Kunstharzmischung für die Unterfolie), mit einem anderen Kunstharz, vorzugsweise einem Acrylnitril-Copolymerisat oder einem Kunstharzgemisch auf der Basis von Acrylnitril-Copolymerisat, sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist,
    3. und einer an der Unterfolie bzw. an den Unterfolien angeordneten Schaumschicht oder Hinterschäumung, vorzugsweise einer Polyurethanschaumschicht oder einer Polyurethanhinterschäumung, sowie ggf.
    4. einer Oberfolie oder Oberflächenschicht, vorzugsweise einer weichmacherfreien oder weichmacherarmen Oberfolie mit
        4.1 einer Dicke von 40—500 μm, vorzugsweise 100—350 μm,
        4.2.1 aus Polyvinylchlorid sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist, oder
        4.2.2 Mischungen von polyvinylchlorid mit einem anderen Kunstharz, vorzugsweise einem Acrylnitril-Copolymerisat oder einem Kunstharzgemisch auf der Basis von Acrylnitril-Copolymerisat sowie einem plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid verträglich ist, dadurch gekennzeichnet, daß zwischen der Unterfolie oder der

7

Unterschicht und der Schaumschicht bzw. Hinterschäumung mindestens

5. eine Sperrschicht oder Sperrfolie mit einer Dicke von

5.1 10 µm 300 µm, angeordnet ist, die aus einem

5.1.2 Polymethacrylsäureester, unvernetztem oder vernetztem Polyurethan, Vinylchloridcopolymerisat mit Polyvinylacetat oder Polyvinylbutral, Polyvinylidenchlorid oder Polyvinylidenfluorid, Olefincopolymerisat, Polyamid, kautschukartigem Terpolymerisat aus Ethylen, Propylen und einem Dien (EPDM), kautschukartigem Ethylen-Propylen-Mischpolymerisat (EPM), chloriertem Polyethylen, oder aus Polytetrafluorethylen besteht oder eines oder mehrere dieser Polymeren als Legierungsbestandteil enthält,

5.2 wobei die Schaumschicht oder Hinterschäumung

5.2.1 eine Stauchhärte bei 40% Stauchung (nach DIN 53577) von 15 bis 45 kPa formgeschäumt und/ oder 3 bis 20 kPa im Becher frei geschäumt aufweist und

5.3 die aus Sperrschicht oder Sperrfolie, Unterfolie und Oberfolie und/oder Deckschicht bestehende Verbundfolie eine Shore-D-Härte von

5.3.1 20 bis 65, vorzugsweise 25 bis 60 aufweist.

2. Formkörper, Formkörperteile oder Folienbahnen für Kraftfahrzeuginnenräume nach Anspruch 1, dadurch gekennzeichnet, daß auf der Oberfolie oder Oberflächenschicht oder auf der, der Schaumschicht entgegengesetzten Seite der Unterfolie oder Unterschicht mindestens

eine geschäumte oder ungeschäumte Deckschicht oder Deckfolie mit einer Schichtdicke von 3—500 µm, vorzugsweise 6—300 µm, angeordnet ist.

3. Formkörper, Formkörperteile oder Folienbahnen für Kraftfahrzeuginnenräume Anspruch 2, dadurch gekennzeichnet, daß die geschäumte oder ungeschäumte Deckschicht oder Deckfolie

aus einem Polyacrylat, Polyethacrylat, Polyester, Polyäther oder vernetztem oder unvernetztem Polyurethan, Polyvinylidenhalogenid, einem kautschukartigen Terpolymerisat aus Ethylen, Propylen und einem Dien (EPDM), vorzugsweise einer Legierung oder Mischung von EPDM mit Polypropylen und/oder einem Polyester, kautschukartigem Ethylen-Propylen-Mischpolymerisat (EPM), chloriertem Polyethylen oder ein oder mehrere der Polymeren, vorzugsweise als Legierung (Blend) oder vernetzt oder aufgepfropft, sowie Verarbeitungshilfsmittel und/ oder Zusatzmittel, insbesondere anorganische und/oder organische Pigmente bzw. Farbstoffe, enthält.

4. Formkörper, Formkörperteile oder Folienbahnen für Kraftfahrzeuginnenräume nach einem oder mehreren der Ansprüche 1 bis 3, dadurch gekennzeichnet, daß unter dem Polyurethanschaum oder der Polyurethanhinterschäumung ein,

Träger oder eine profilierte oder unprofilierte, geformte oder ungeformte Trägerplatte oder Trägerschicht angeordnet ist.

5. Formkörper, Formkörperteile oder Folienbahnen für Kraftfahrzeuginnenräume nach einem oder mehreren der Ansprüche 1 bis 4, dadurch gekennzeichnet, daß die Sperrschicht oder Sperrfolie auf

mindestens einer Seite eine Haftvermittlerschicht oder -folie trägt, die sowohl zur Folie als auch zum Schaum bzw. zur Hinterschäumung eine Haftung ergibt und ein haftendes Polyurethanharz, ein polare Gruppen enthaltendes Olefincopolymerisat, vorzugsweise polare Gruppen enthaltendes Ethylen-Vinylacetat-Copolymerisat und/oder Ethylen-Acrylsäureester-Copolymerisat oder Vinylidenfluoridhomo- oder -copolymerisat, Vinylchloridhomo- und/oder -pfropfpolymerisat, vorzugsweise Vinylacetat-Copolymerisat, Vinylbutyral-Copolymerisat, Vinylidenchloridhomo- oder -copolymerisat, enthält oder daraus besteht.

6. Formkörper, Formkörperteile oder Folienbahnen für Kraftfahrzeuginnenräume nach Ansprüchen 1 bis 5, dadurch gekennzeichnet, daß die Oberfolie aus einer Mischung oder Legierung von Polyvinylchlorid mit einem Polyacrylat und/oder Polymethacrylat und/oder Polyurethan und/oder einem polare Gruppen enthaltenden Olefinco- oder -terpolymerisat besteht oder dieses sowie Verarbeitungshilfs- und/oder Zusatzmittel enthält.

7. Formkörper Formkörperteile oder Folienbahnen für Kraftfahrzeuginnenräume nach Ansprüchen 1 bis 6, dadurch gekennzeichnet, daß die Deckschicht geschäumte Kugeln oder kugelähnliche Kunststoffkörper, Kunststoffhohlkörper, Mikrokugeln oder Kunststoff-Fasern enthält.

8. Formkörper, Formkörperteile oder Folienbahnen für Kraftfahrzeuginnenräume nach Ansprüchen 1 bis 7, dadurch gekennzeichnet, daß die Verbundfolie eine Narbstruktur aufweist.

9. Verfahren zur Herstellung von Formkörpern, Formkörperteilen oder Folienbahnen für Kraftfahrzeuginnenräume, nach einem oder mehrehen der Ansprüche 1 bis 8 wobei die Kunststoffmischungen der Untersowie ggf. der Oberfolie in einem Extruder oder anderen, an sich bekannten Plastifiziervorrichtungen, zusammen mit den Verarbeitungshilfsmitteln vermischt, erhitzt und plastifiziert werden sowie unter Bildung einer oder mehrerer Folien bzw. Schichten in einem Kalandrier-, Kaschier- und/oder Coextrusionsverfahren vereinigt werden, dadurch gekennzeichnet, daß auch die Kunststoffmischung der Sperrfolie oder Sperrschicht und/oder der Deckfolie oder Deckschicht in einem Extruder oder einer anderen an sich bekannten Plastifiziervorrichtung zusammen mit den Verarbeitungshilfsmitteln vermischt, erhitzt und plastifiziert wird und die Vereinigung mit der Unterfolie oder der aus Unterund Oberfolie bestehenden Verbundfolie im Kalandrierverfahren erfolgt.

10. Verfahren nach Anspruch 9, dadurch gekennzeichnet, daß die Sperr- und/ oder Deckschicht mittels eines Rakel-, Druckwalz- oder Sprühverfahrens auf die Unter- oder aus Unter- und Oberfolie bestehende

EP 0 161 477 B1

Verbundfolie, mit oder ohne Narbgebung versehene Verbundfolie oder daraus durch Thermoformung hergestellten Formkörper oder Formkörperteile, aufgebracht und ggf. nachfolgend eine weitere Behandlung, vorzugsweise Narbgebung oder weitere Narbgebung, erfolgt.

11. Verfahren nach Anspruch 10, dadurch gekennzeichnet, daß die Sperr- und/oder Deckschicht mittels eines Rakel-, Druckwalz- oder Sprühverfahrens auf die Unter- oder aus Unter- und Oberfolie bestehende Verbundfolie aufgebracht wird, nachdem die Narbgebung der Unter- oder aus Unter- und/oder Oberfolie bestehende Verbundfolie erfolgt.

12. Verfahren nach einem oder mehreren der Ansprüche 9 bis 11, dadurch gekennzeichnet, daß die Sperr- und/oder Deckschicht in Form einer Verdunstungsmittel enthaltenden Dispersion oder Lösung aufgetragen wird.

13. Verfahren nach einem oder mehreren der Ansprüche 9 bis 12, dadurch gekennzeichnet, daß die Verformung oder Umformung der Verbundfolie in einer oberflächenstrukturierten Form erfolgt, vorzugsweise unter Verwendung oder teilweiser oder stellenweiser Verwendung eines negativen Tiefziehverfahrens.

14. Verfahren nach einem oder mehreren der Ansprüche 9 bis 13, dadurch gekennzeichnet, daß der Gehalt an inneren Weichmachern oder weichmachenden Polymerisaten in der Sperrfolie, die vorzugsweise aus oder unter Mitverwendung von Polymethacrylsäureester und/oder Homo- oder Copolymerisat von Ethylenvinylalkohol besteht oder diese enthält, 0,1—60 Gew.-%, vorzugsweise 10—49 Gew.-%, (bezogen auf 100 Gew.-% der trockenen Kunstharzlegierung) beträgt.

**Revendications**

1. Corps moulés, parties de corps moulés ou feuilles en bande pour l'intérieur de véhicules à moteur, composés

1. de feuilles composites emboutissables, non moussées,

1.1. présentant une épaisseur de 500 µm à 2500 µm, de préférence de 600 µm à 1500 µm,

1.2. stratifiées et formées de deux ou de plusieurs couches, composites

2. d'une ou de plusieurs feuilles inférieures, pauvres en ou exemptes de plastifiants, constituées

2.1. par des mélanges de chlorure de polyvinyle (PVC), de copolymères d'acrylonitrile et de butadiène (ABS) ainsi que d'un agent plastifiant à base d'un polymère plastifiant à poids moléculaire élevé, comprenant des groupes polaires, ayant un poids moléculaire supérieur à 10.000, de préférence supérieur à 30.000, et formant une phase avec le chlorure de polyvinyle ou étant compatible avec le chlorure de polyvinyle ou

2.2. par des mélanges de chlorure de polyvinyle (PVC) et de copolymères d'acrylonitrile et de butadiène (ABS), ayant une teneur en PVC-ABS supérieure à 40% en poids, de préférence supérieure à 50% en poids (par rapport à 100 parties en poids du mélange de résines synthétiques pour la feuille inférieure), avec une autre résine synthétique, de préférence un copolymère d'acrylonitrile ou avec un mélange de résines symthétiques à base d'un copolymère d'acrylonitrile, ainsi qu'avec un agent plastifiant à base d'un polymère plastifiant à poids moléculaire élevé, comprenant des groupes polaires, présentant un poids moléculaire supérieur à 10.000, de préférence supérieur à 30.000, et formant une phase avec le chlorure de polyvinyle ou étant compatible avec le chlorure de polyvinyle,

3. d'une couche de mousse ou d'une mousse dorsale, de préférence une couche de mousse de polyuréthane ou une mousse dorsale de polyuréthane, disposée sur la ou les couches inférieures, ainsi que, le cas échéant,

4. d'une feuille supérieure ou d'une couche de surface, de préférence une feuille de surface pauvre en ou exempte de plastifiants,

4.1. ayant une épaisseur de 40 à 500 µm, de préférence de 100 à 350 µm, constituée

4.2.1. par du chlorure de polyvinyle ainsi que par un agent plastifiant à base d'un polymère plastifiant à poids moléculaire élevé comprenant des groupes polaires, présentant un poids moléculaire supérieur à 10.000, de préférence supérieur à 30.000, et formant une phase avec le chlorure de polyvinyle ou étant compatible avec le chlorure de polyvinyle, ou

4.2.2. par des mélanges de chlorure de polyvinyle avec une autre résine synthétique, de préférence un copolymère d'acrylonitrile ou un mélange de résines synthétiques à base d'un copolymère d'acrylonitrile ainsi qu'avec un agent plastifiant à base d'un polymère plastifiant à poids moléculaire élevé comprenant des groupes polaires, ayant un poids moléculaire supérieur à 10.000, de préférence supérieur à 30.000, et étant compatible avec le chlorure de polyvinyle, caractérisés en ce qu'on dispose entre la feuille inférieure ou la couche inférieure et la couche de mousse ou la mousse dorsale au moins

5. une couche d'arrêt ou une feuille d'arrêt,

5.1. ayant une épaisseur de 10 µm à 300 µm, constituée

5.l.2. par un polymère d'ester de l'acide méthacrylique, un polyuréthane non réticulé ou réticulé, un copolymère de chlorure de vinyle avec de l'acétate de polyvinyle ou du polyvinylbutyral, du chlorure de polyvinylidène ou du fluorure de polyvinylidène, un copolymère d'oléfine, un terpolymère caoutchouteux d'éthylène, de propylène et d'un diène (EPDM), un polymère mixte caoutchouteux d'éthylène et de Propylène (EPM), un polyéthylène chloré ou contenant un ou plusieurs de ces polymères comme composant d'un alliage,

9

5.2. la couche de mousse ou la mousse dorsale présentant

5.2.1. une dureté à l'écrasement pour un écrasement de 40% (selon la norme DIN 53577) de 15 à 45 kPa pour un moussage moulé et/ou de 3 à 20 kPa pour un moussage libre dans un bécher et

5.3. la feuille composite constituée par la couche d'arrêt ou la feuille d'arrêt, la feuille inférieure et la feuille supérieure et/ou la couche de recouvrement présentant une dureté Shore D de 20 à 65, de préférence de 25 à 60.

2. Corps moulés, parties de corps moulés ou feuilles en bande pour l'intérieur de véhicules à moteur selon la revendication 1, caractérisés en ce qu'on dispose sur la feuille supérieure ou la couche de surface ou sur le côté opposé à la couche de mousse de la feuille inférieure ou de la couche inférieure, au moins une couche de recouvrement ou au moins une feuille de recouvrement moussée ou non moussée présentant une épaisseur de couche de 3 à 500 µm, de préférence de 6 à 300 µm.

3. Corps moulés, parties de corps moulés ou feuilles en bande pour l'intérieur de véhicules à moteur selon la revendication 2, caractérisés en ce que la couche de recouvrement ou la feuille de recouvrement moussée ou non moussée est constituée par un polyacrylate, un polyméthacrylate, un polyester, un polyéther ou un polyuréthane réticulé ou non réticulé, un halogénure de polyvinylidène, un terpolymère caoutchouteux d'éthylène, de propylène et d'un diène (EPDM), de préférence par un alliage ou un mélange d'EPDN avec du polypropylène et/ou un polyester, un polymère mixte caoutchouteux d'éthylène et de propylène (EPM), un polyéthylène chloré ou par un ou plusieurs des polymères, de préférence sous forme d'un alliage (Blend) ou réticulés ou greffés, ainsi que par des agents de mise en oeuvre et/ou des adjuvants, en particulier des pigments ou des colorants inorganiques et/ou organiques.

4. Corps moulés, parties de corps moulés ou feuilles en bande pour l'intérieur de véhicules à moteur selon l'une ou plusieurs des revendications 1 à 3, caractérisés en ce qu'on dispose sous la mousse de polyuréthane ou la mousse dorsale de polyuréthane un support ou une plaque de support ou une couche de support profilée ou non profilée, moulée ou non moulée.

5. Corps moulés, parties de corps moulés ou feuilles en bande pour l'intérieur de véhicules à moteur selon l'une ou plusieurs des revendications 1 à 4, caractérisés en ce que la couche d'arrêt ou la feuille d'arrêt porte sur au moins un des côtés une couche ou une feuille adhésive qui confère une adhérence à la feuille ainsi qu'à la mousse ou à la mousse dorsale et en ce qu'elle contient ou est constituée par une résine de polyuréthane adhésive, un copolymère d'oléfine contenant des groupes polaires, de préférence un copolymère d'éthylène et d'acétate de vinyle et/ou un copolymère d'éthylène et d'ester de l'acide acrylique ou un homopolymère ou un copolymère de fluorure de vinylidène, un homopolymère et/ou un polymère greffé de chlorure de vinyle, de préférence un copolymère d'acétate de vinyle, un copolymère de vinylbutyral, un homopolymère ou un copolymère de chlorure de vinylidène contenant des groupes polaires.

6. Corps moulés, parties de corps moulés ou feuilles en bande pour l'intérieur de véhicules à moteur selon les revendications 1 à 5' caractérisés en ce que la feuille supérieure est constituée par un mélange ou par un alliage de chlorure de polyvinyle avec un polyacrylate et/ou un polyméthacrylate et/ou un polyuréthane et/ou un copolymère ou un terpolymère d'oléfine contenant des groupes polaires ou en ce qu'elle contient un ou plusieurs de ces composants ainsi que, le cas échéant, des additifs de mise en oeuvre et/ou des adjuvants.

7. Corps moulés, parties de corps moulés ou feuilles en bande pour l'intérieur de véhicules à moteur selon les revendications 1 à 6, caractérisés en ce que la couche de recouvrement contient des billes moussées ou des corps en matière synthétique semblables à des billes, des corps creux en matière synthétique, des microbilles ou des fibres en matière synthétique.

8. Corps moulés, parties de corps moulés ou feuilles en bande pour l'intérieur de véhicules à moteur selon les revendications 1 à 7, caractérisés en ce que la feuille composite présente une structure grenue.

9. Procédé de fabrication de corps moulés, parties de corps moulés ou feuilles en bande pour l'intérieur de véhicules à moteur selon l'une des revendications 1 à 8, les mélanges de matières synthétiques de la feuille inférieure ainsi que, le cas échéant, de la feuille supérieure étant mélangés, chauffés et plastifiés dans une extrudeuse ou dans d'autres dispositifs de plastification connus en soi avec les agents de mise en oeuvre et assemblés en formant une ou plusieurs feuilles ou couches dans un procédé de calandrage, de laminage et/ou de coextrusion, caractérisé en ce qu'on mélange, chauffe et plastifie également le mélange de matières synthétiques de la feuille d'arrêt ou de la couche d'arrêt et/ou de la feuille de recouvrement ou de la couche de recouvrement dans une extrudeuse ou dans un autre dispositif de plastification connu en soi avec les agents de mise en oeuvre et en ce que l'assemblage avec la feuille inférieure ou avec la feuille composite constituée par les feuilles inférieure et supérieure est réalisé par le procédé de calandrage.

10. Procédé selon la revendication 9, caractérisé en ce que la couche d'arrêt et/ou de recouvrement est disposée au moyen d'un procédé à raclette, de laminage ou de pulvérisation sur la feuille inférieure ou sur la feuille composite constituée par des feuilles inférieure et supérieure, présentant ou non une surface grenue et en ce que les corps moulés ou les parties de corps moulés fabriqués à partir de ceux-ci par thermomoulage sont soumis à un traitement ultérieur, de préférence un grainage ou un grainage ultérieur.

11. Procédé selon la revendication 10, caractérisé en ce que la couche d'arrêt et/ou la couche de recouvrement est disposée au moyen d'un procédé à raclette, de laminage ou de pulvérisation sur la feuille inférieure ou sur la feuille composite constituée par des feuilles inférieure et supérieure après avoir réalisé

# EP 0 161 477 B1

le grainage de la feuille inférieure ou de la feuille composite constituée par des feuilles inférieure et supérieure.

12. Procédé selon l'une ou plusieurs des revendications 9 à 11, caractérisé en que la couche d'arrêt et/ou de recouvrement est disposée sous forme d'une dispersion ou d'une solution contenant un diluant.

13. Procédé selon l'une ou plusieurs des revendications 9 à 12, caractérisé en ce que le moulage ou la transformation de la feuille composite en une forme ayant une surface structurée est de préférence réalisé en utilisant ou en utilisant partiellement ou par endroits un procédé d'emboutissage négatif.

14. Procédé selon l'une ou plusieurs des revendications 9 à 13 caractérisé en ce que la teneur en plastifiants internes ou en polymères plastifiants dans la couche d'arrêt, constituée par ou contenant de préférence un polyester de l'acide méthacrylique et/ou un homopolymère ou un copolymère de l'alcool éthylènevinylique, est de 0,1 à 60% en poids, de préférence de 10 à 49% en poids, (par rapport à 100% en poids de l'alliage de résines synthétiques sec).

## Claims

1. Moulded parts, moulded part components or film sheetings for the interiors of motor vehicles, composed of
   1. thermoformable, unfoamed composite films, which
      1.1 have a thickness of between 500 m and 2,500 m, preferably between 600 µm and 1,500 µm;
      1.2 are laminated and made up of two or multiple layers, consisting of
   2. one or more lower films, containing no or only low amounts of plasticizer, of
      2.1 mixtures of polyvinyl chloride (PVC), acrylonitrile-butadiene-copolymer (ABS) as well as a plasticizing agent based on a plasticizing high polymer with polar groups, which has a molecular weight of greater than 10,000, preferably greater than 30,000, and forms one phase with polyvinyl chloride or is compatible with polyvinyl chloride; or
      2.2 mixtures of polyvinyl chloride (PVC) and acrylonitrile-butadiene-copolymers (ABS) with a PVC-ABS content of more than 40% by weight, preferably more than 50% by weight (in relation to 100 parts by weight of the synthetic resin mixture for the lower film) with another synthetic resin, preferably an acrylonitrilecopolymer or a synthetic resin mixture based on an acrylonitrile-copolymer, as well as a plasticizing agent based on a plasticizing high polymer with polar groups, that has a molecular weight of greater than 10,000, preferably greater than 30,000, and forms one phase with polyvinyl chloride or is compatible with polyvinyl chloride,
   3. and a foam layer or foamed backlayer arranged on the lower film or lower films, the layer or foamed backlayer being preferably a polyurethane foam layer or a polyurethane foamed backlayer; as well as, if appropriate,
   4. an upper film or surface layer, preferably of an upper film containing no or only low levels of plasticizer, with
      4.1 a thickness of between 40 and 500 µm, preferably between 100 and 350 µm,
      4.2.1 of polyvinyl chloride as well as of a plasticizing agent based on a plasticizing high polymer with polar groups, that has a molecular weight of greater than 10,000, preferably greater than 30,000, and forms one phase with polyvinyl chloride or is compatible with polyvinyl chloride; or
      4.2.2 mixtures or polyvinyl chloride with another sythetic resin, preferably a acrylonitrilecopolymer or a synthetic resin mixture based on an acrylonitrile-copolymer, as well as a plasticizing agent based on a plasticizing high polymer with polar groups, that has a molecular weight of greater than 10,000, preferably greater than 30,000, and is compatible with polyvinyl chloride, characterized in that between the lower film or the lower layer and the foam layer or foamed backlayer at least
   5. one barrier layer or barrier film with a thickness of
      5.1 between 10 and 300 µm, is arranged, which consists of a
      5.1.2 polymethacrylate, non-cross-linked or cross-linked polyurethane, vinylchloride copolymer with polyvinyl acetate or polyvinyl butral, polyvinylidene chloride or polyvinylidene fluoride, olefin copolymer, polyamide, rubberlike terpolymer of ethylene propylene and a diene (EPDM), rubberlike ethylenepropylene copolymer (EPM), chlorinated polyethylene, or of polytetrafluoroethylene, or contains one or more of these polymers as blend components,
      5.2 whereby the foam layer or foamed backlayer
      5.2.1 has a compressive strength at 40% compression (in accordance with DIN 53577) of between 15 and 45 kPa (when foamed in a mould) and/or between 3 and 20 kPa (when allowed to foam freely in a cup) and
      5.3 the composite film, consisting of a barrier layer or barrier film, a lower film and an upper film and/or outer layer, has a Shore D hardness of
      5.3.1 between 20 and 65, preferably between 25 and 60.

2. Moulded parts, moulded part components or film sheetings for the interiors of motor vehicles in accordance with claim 1, characterized in that arranged on the upper film or surface layer or on the side of the lower film or lower layer facing towards the foam layer there is at least one foamed or unfoamed outer layer or outer film with a layer thickness of between 3 and 500 µm, preferably between 6 and 300 µm.

3. Moulded parts, moulded part components or film sheetings for the interiors of motor vehicles in

11

accordance with claim 2, characterized in that the foamed or unfoamed outer layer or outer film consists of a polyacrylate, polymethacrylate, polyester, polyether or cross-linked or non-cross-linked polyurethane, polyvinylidene halide, a rubberlike terpolymer of ethylene, propylene and a diene (EPDM), preferably a blend or mixture of EPDM with polypropylene and/or a polyester, rubberlike ethylene-propylene copolymer (EPM), chlorinated polyethylene, or contains one or more of these polymers, preferably as blend (alloy) or crosslinked or grafted, as well as processing aids and/or accessory agents, in particular inorganic and/or organic pigments or dyestuffs.

4. Moulded parts, moulded part components or film sheetings for the interiors of motor vehicles in accordance with any one of claims 1 to 3, characterized in that arranged beneath the polyurethane foam or the polyurethane foamed backlayer there is a carrier or a carrier plate or carrier layer, which carrier plate or carrier layer may or may not have a profile and which may or may not be moulded.

5. Moulded parts, moulded part components or film sheetings for the interiors of motor vehicles in accordance with any one of claims 1 to 4, characterized in that the barrier layer or barrier film bears on at least one side a coupling layer or film, which provides adhesion both to the film and to the foam or foamed backlayer and contains or consists of an adhesive polyurethane resin, an olefin copolymer containing polar groups, preferably ethylene vinyl acetate copolymer and/or ethylene acrylate copolymer or vinylidene-fluoride homopolymer or copolymer, vinyl chloride homopolymer and/or grafted polymer, preferably vinyl acetate copolymer, vinyl butyral copolymer, vinylidene chloride homopolymer or copolymer containing polar groups.

6. Moulded parts, moulded part components or film sheetings for the interiors of motor vehicles in accordance with claims 1 to 5, characterized in that the upper film consists of a mixture or blend of polyvinyl chloride with a polyacrylate and/or polymethacrylate and/or polyurethane and/or an olefin copolymer or terpolymer containing polar groups or that the upper film contains this as well as processing aids and/or accessory agents.

7. Moulded parts, moulded part components or film sheetings for the interiors of motor vehicles in accordance with claims 1 to 6, characterized in that the outer layer contains foamed spheres or spherical plastic structures, blow moulded structures, microspheres or synthetic fibres.

8. Moulded parts, moulded part components or film sheetings for the interiors of motor vehicles in accordance with claims 1 to 7, characterized in that the composite film has a grained structure.

9. Process for the manufacture of moulded parts, moulded part components or film sheetings for the interiors of motor vehicles in accordance with any one of claims 1 to 8, whereby the polymer mixtures of the lower film as well as of, if appropriate, the upper film together with the processing aids are mixed, heated and plasticized in an extruder or in other known plasticizing means and are combined to form one or more films or layers in a calendering, laminating or coextrusion process, characterized in that the polymer mixture of the barrier film or barrier layer and/or of the outer film or outer layer together with the processing aids are also mixed, heated and plasticized in an extruder or in another known plasticizing means and that the uniting of the said polymer mixture with the lower film or the composite film consisting of lower and upper films takes place in the calendering process.

10. Process in accordance with claim 9, characterized in that the barrier and/or outer layer is applied by means of a knife, calendering or spray process to the lower film or to the composite film which consists of lower film and upper film and which may or may not have graining, or to the moulded parts or moulded part components produced therefrom by thermoforming, and that, if appropriate, a further process, preferably the production of a grained finish or further graining, follows.

11. Process in accordance with claim 10, characterized in that the barrier and/or outer layer is applied by means of a knife, calendering or spray process to the lower film, or to the composite film consisting of lower film and upper film, after the graining process to the lower film or to the composite film consisting of lower film and upper film has been carried out.

12. Process in accordance with any of claims 9 to 11, characterized in that the barrier and/or outer layer is applied in the form of a dispersion or solution containing evaporating agents.

13. Process in accordance with any one of claims 9 to 12, characterized in that the moulding or thermoforming of the composite film is carried out in a mould, the surface of which is textured, preferably with the use, or with the partial use or with the use in particular parts of a female thermoforming process.

14. Process in accordance with any one of claims 9 to 13, characterized in that the content of internal plasticizers or plasticizing polymers in the barrier film, which preferably consists of or contains polymethacrylate and/or homopolymer or copolymer of ethylene-vinyl alcohol, is between 0.1 and 60% by weight, preferably between 10 and 49% by weight (related to 100% by weight of the dry synthetic resin blend).

EP 0 161 477 B1

Fig. 1 — 12

Fig. 2 — 14 / 12

Fig. 3 — 14 / 12 / 15

Fig. 4 — 16 / 14 / 12 / 15

Fig. 5 — 16 / 14 / 12 / 15

1

Fig. 6

Fig. 7

Fig. 8